# EUROPEAN PATENT SPECIFICATION

(11) **EP 0 523 257 B1**
(45) Date of publication and mention of the grant of the patent: **08.05.1996**
(21) Application number: 92904983.1
(22) Date of filing: 10.02.1992
(51) Int. Cl.: B62M 25/04

(54) **DEVICE FOR MAKING GEAR CHANGE OF BICYCLE**
EINRICHTUNG FÜR DIE GANGSCHALTUNG EINES FAHRRADES
DISPOSITIF DE CHANGEMENT DE VITESSES POUR BICYCLETTES

(30) Priority: 13.02.1991 JP 42654/91
(43) Date of publication of application: 20.01.1993
(73) Proprietor: MORY SUNTOUR INC., Kawachinagano-shi, Osaka-fu (JP)
(72) Inventor: TAGAWA, Koichi, Kawachinagano-shi, Osaka-fu (JP)
(74) Representative: Reinhard - Skuhra - Weise & Partner
(86) International application number: PCT/JP92/00138
(87) International publication number: WO 92/14645

(56) References cited:
- EP-A- 0 371 429
- EP-A- 0 485 863
- DE-U- 8 536 537
- DE-U- 9 015 515
- FR-A- 2 285 655
- FR-A- 2 563 174
- FR-A- 2 657 062
- GB-A- 0 857 008
- GB-A- 0 891 512
- JP-A-58 191 682
- JP-Y-44 018 334
- JP-Y-44 026 571
- JP-Y-48 002 600
- JP-Y-48 033 174
- US-A- 3 218 879
- US-A- 3 856 123

## Description

### [Field of the Invention]

The present invention relates to a bicycle speed change operation assembly. More specifically the present invention relates to a bicycle speed change assembly which ensures stable handlebar operation as well as immediate braking operation during speed chaning operation, and is applicable to a variety of handlebars including what is known as a flat handlebar.

### [Background Art]

A bicycle speed change assembly for sports type bicycles such as racing bikes has been commonly mounted on a bicycle frame member such as a down tube or a top tube. This location unavoidably requires that a cyclist must unhand a handlebar to achieve a speed change operation. It is only natural, therefore, that during a speed change operation a cyclist has no immediate access to a braking apparatus. In addition, the single-handed cycling unavoidably leads to an unstable handlebar operation.

On the other hand speed change operation is required in general when there is a change in road condition, for example, from a flat road to a slope, or vice versa. In such occasions, however, brake operation is also often called for since such change in road condition often leads to less stable riding.

To alleviate this problem a conventional speed change operation assembly, as known from EP-A-485863 [Art 54 (3) EPC], FR-A-2 285 655 and DE-U-8 536 537.8, has been mounted, for example, on a handle grip portion or in proximity with a brake lever in an attempt that the handlebar or the brake may be accessed as quickly as possible from the speed change operation lever. Indeed this has been the only way to improve riding safety during a speed changing operation.

However closely located was a speed change operation lever to a brake lever or a handlebar grip portion, the speed change operation does call for a hand to leave the handlebar or the brake lever, and as a result single-handed cycling is unavoidable, and so is a disturbed access to a brake apparatus.

In an attempt to solve this problem a proposal has been made for example as in the Japanese Patent Application Laid-open No. Hei-2-147487 which discloses a speed change operation assembly wherein a speed change operation lever extends out of a brake bracket.

However, the speed change operation assembly disclosed thereinabove has a problem of limited application; it is only applicable to what is known as a drop-type handlebar, and therefore bicycles mounted with other types of handlebars are out of the scope of application.

Furthermore, that particular speed change operation assembly disclosed thereinabove requires that for speed change operation either a thumb or a forefinger must be released from a handlebar grip Therefore, it does not provide a cyclist with immediate access to a braking appartus, or it does not solve, either, the problem of disturbed handling stability.

A further attempt to solve the above mentioned problem by using a cylindrical handgrip operation member is disclosed in JP-44-18 334, JP-44-26571, JP-48-2600, JP-48-33174, JP-58-191 682, GB-A-891 512 and US-A-3 218 879. However, these members require regripping after every change operation, which also disturbs handling stability of the bicycle.

### [Disclosure of the Invention ]

It is therefore a purpose of the present invention to provide a bicycle speed change operation assembly wherein a speed change operation can be achieved without disturbing stable handlebar operation. Another purpose of the present invention is to provide a bicycle speed change operation assembly wherein a speed change operation can be achieved without disturbing immediate access to a braking apparatus and thereby greatly improving riding safety. Still another purpose of the present invention is to provide a bicycle speed change operation assembly which is applicable to a variety of handlebars including a flat handlebars.

The present invention according to Claim 1 is a bicycle speed change operation assembly comprising a cylindrical operation member rotatably supported around a grip end portion of a handlebar, a speed change operation mechanism provided in proximity of that grip end portion of the handlebar and capable of winding and unwinding a speed control cable, and a transmission mechanism provided between that cylindrical operation member and the speed change operation mechanism for driving the speed change operation mechanism in response to the rotation of that cylindrical operation member, wherein the speed change operation mechanism functions to progressively wind or unwind the control cable each in response to rotational reciprocation of the cylindrical operation member in only one direction from a neutral rotational position.

The present invention according to Claim 2 is a bicycle speed change operation assembly wherein the speed change operation mechanism according to Claim 1 further comprises a shaft member provided in proximity of the grip end portion, and a cable reel rotatably mounted around the shaft member and linked via said transmission mechanism with the cylindrical operation member; wherein the cylindrical operation member is spring-urged toward the neutral rotational position which provides a commencing point at the time of rotation in cable winding and unwinding directions; and the transmission mechanism functions to rotate the cable reel with the cylindrical operation member at the time of rotating the cylindrical operation member in the cable winding or unwinding direction from the neutral position but to disconnect rotational coupling relation between the cylindrical operation member and the cable reel when the cylindrical operation member is rotated back to the neutral position.

The present invention according to Claim 3 is a bicycle speed change operation assembly wherein the cylindrical operation member has a finger engaging bulge projecting radially outward for engagement with a cyclist's finger.

Other purposes, characteristics and advantages of the present invention will be further detailed in the later description of the preferred embodiments hereinafter by referring to the following attached Figures.

### [Brief Description of the Drawings ]

Figs. 1 to 18 show a first embodiment of the present invention.

Fig. 1 is a plan view of a speed change operation assembly thereof.

Fig. 2 is a cross-sectional view taken on the line II - II in Fig. 1.

Fig. 3 is a cross-sectional view taken on the line III - III in Fig. 1.

Fig. 4 is a cross-sectional view taken on the line IV - IV in Fig. 2.

Fig. 5 is a cross-sectional view taken on the line V - V in Fig. 4.

Fig. 6 is a cross-sectional view taken on the line VI - VI in Fig. 4.

Fig. 7 is a fragmentary cross-sectional view taken on the line VII - VII in Fig. 4.

Fig. 8 is a side view of an engagement member.

Fig. 9 is a front view of the engagement member.

Fig. 10 is to describe a function of the speed change operation assembly according to the first embodiment, showing a cross-sectional view taken on the line VII - VII in Fig. 4.

Fig. 11 is to describe a function of the speed change operation assembly according to the first embodiment, showing a fragmentary cross-sectional view taken on the line VII - VII in Fig. 4.

Fig. 12 is to describe a function of the speed change operation assembly according to the first embodiment, showing a fragmentary cross-sectional view taken on the line VII - VII in Fig. 4.

Fig. 13 is to describe a function of the speed change operation assembly according to the first embodiment, showing a fragmentary cross-sectional view taken on the line X III - X III in Fig. 4.

Fig. 14 is to describe a function of the speed change operation assembly according to the first embodiment, showing a fragmentary cross-sectional view taken on the line X III - X III in Fig. 4.

Fig. 15 is to describe a function of the speed change operation assembly according to the first embodiment, showing a fragmentary cross-sectional view taken on the line X III - X III in Fig. 4.

Fig. 16 is a plan view of the click plate of the click mechanism according to the first embodiment.

Fig. 17 is a plan view of the ball holder of the click mechanism according to the first embodiment.

Fig. 18 is a cross-sectional view taken on the line X V III - X V III in Fig. 17.

Figs. 19 to 21 show a second embodiment of the present invention;

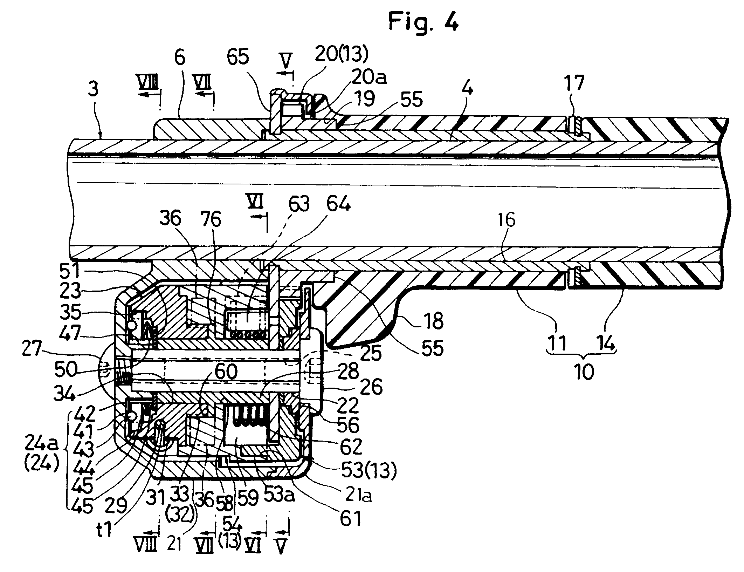

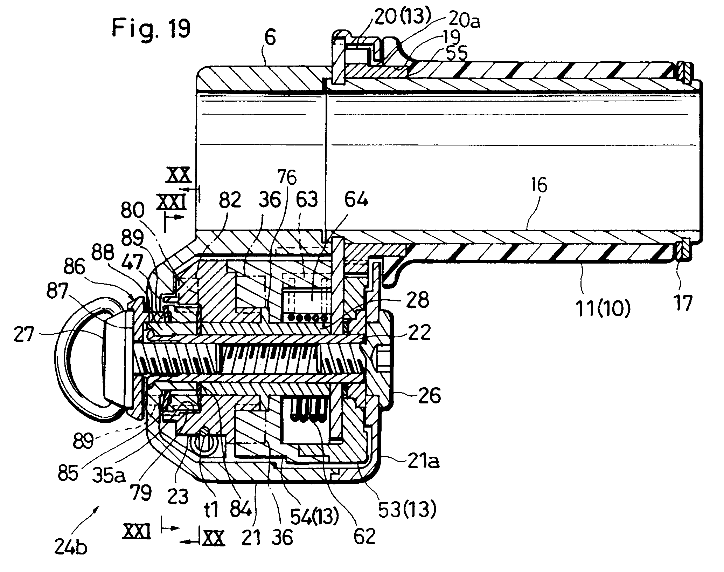

Fig. 19 compares to Fig. 4 in the first embodiment, showing the second embodiment.

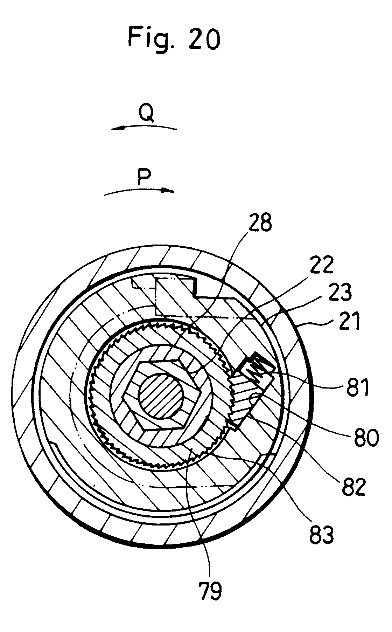

Fig. 20 is a cross-sectional view taken on the line X X - X X in Fig. 19.

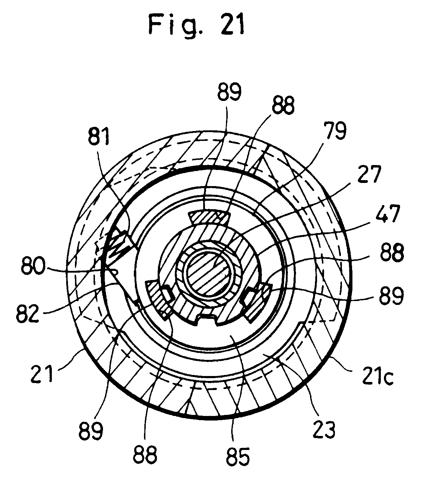

Fig. 21 is a cross-sectional view taken on the line X X I - X X I in Fig. 19.

### [Best Modes for Carrying Out the Invention ]

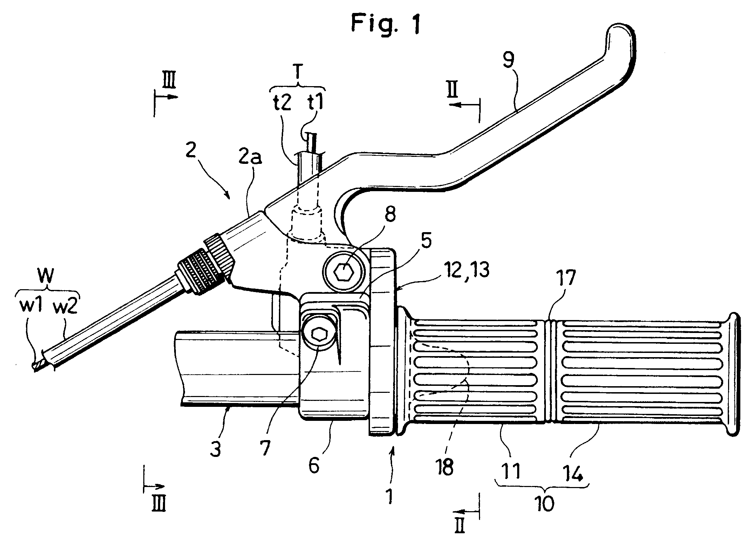

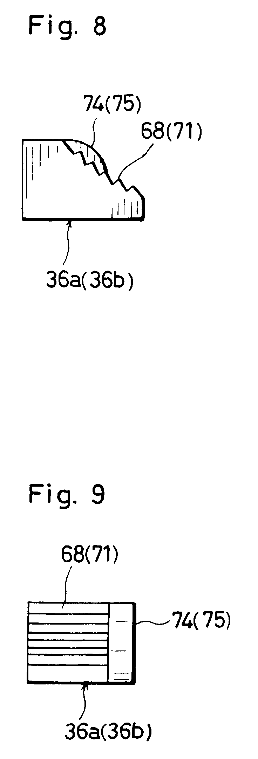

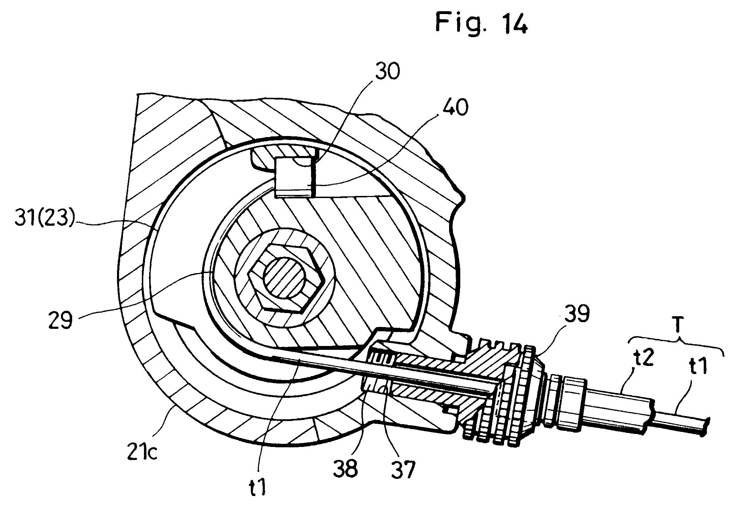

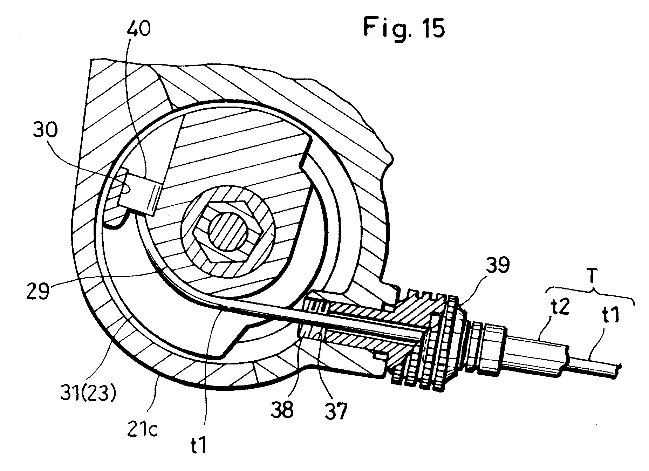

The best modes for carrying out the present invention will now be described in detail referring to Figs. 1 through 21.

Figs. 1 through 18 show a first embodiment of the present invention.

As shown in Figs. 1 through 3 the speed change operation assembly 1 according to this embodiment is formed integrally with a brake lever assembly 2 and a handle grip 10 provided at a grip end portion 4 of a handlebar 3.

Either at a base end portion of a brake bracket 2a of the brake lever assembly 2 or at a transversally inward position of the bicycle handle grip 10, there is provided a cylindrical mount 6, which has a slit 5 running axially through its cylindrical wall. This cylindrical mount 6 is fitted around a transversally inward position of the grip portion 4, and is penetrated by a fitting screw 7 across the slit 5. This screw causes the inner diameter of the cylindrical mount 6 to shrink elastically to fix the brake bracket 2a and the speed change operation assembly 1 on the handlebar 3.

The brake lever assembly 2 according to this embodiment comprises a brake bracket 2a projecting out of a front surface of the handlebar 3 forwardly of the bicycle, a brake lever 9 whose base end portion is pivotally connected to a lever shaft 8 located within the brake bracket 2a while the other end extends forwardly of the handle grip 10. An inner wire w1 and a sheathing outer wire w2 constitute a brake wire W. The outer wire w1 is fastened at a transversally inward end of the brake bracket 2a. The inner wire w2 is introduced into the inner space of the brake bracket 2a and is fastened to the brake lever 9.

The speed change operation assembly 1 according to this embodiment is pivotally fitted around the grip portion 4 of the handlebar 3 at a transversally outward location of the cylindrical mount 6 fitted on the handlebar 3. This speed change operation assembly 1 comprises a cylindrical operation member 11 which also serves a part of the handle grip 10, a speed change operation mechanism 12 mounted forwardly downward of the cylindrical mount 6, and a transmission mechanism 13 which is provided between the cylindrical operation member 11 and the speed change operation mechanism 12 and is responsible to follow operational rotation of the cylindrical operation member 11 to function the speed change operation mechanism 12.

As shown in Figs. 1 through 4 the cylindrical operation member 11 according to this embodiment is supported around the grip portion 4 of the handlebar 3, and together with the cylindrical grip member 14, constitutes the handle grip 10.

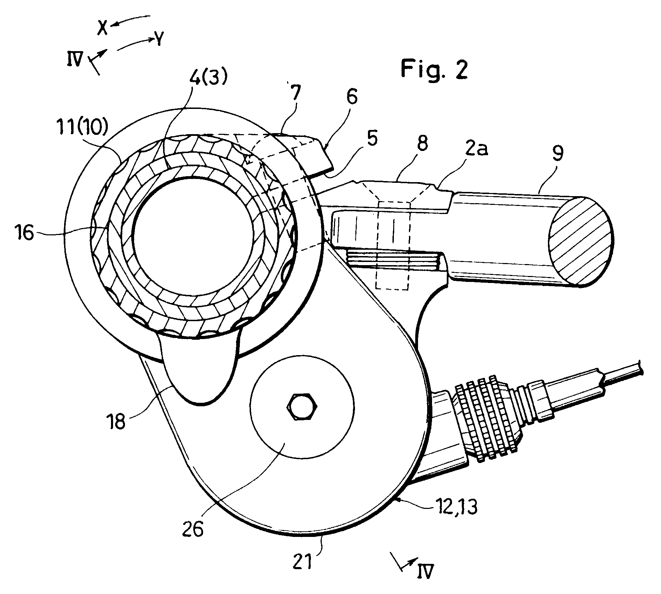

As shown in Figs. 1 and 2 the cylindrical operation member 11 is rotatably fitted around the grip portion 4 of the handlebar 3 via a cylindrical collar 16. To prevent it from slipping off axially outward, the outer end portion of the collar 16 is fitted with a stop ring 17.

On an outer downward surface of the cylindrical operation member 11 at a transversally inward location, there is formed a finger engaging bulge 18 projecting radially outward for engagement with a cyclist's finger to help rotate the cylindrical operation member 11.

It should be appreciated to note here that as shown in Fig. 4 around a transversally inward inner wall portion of the cylindrical operation member 11 there is provided a spline 19 with which a boss 20a on a drive gear 20 of the transmission mechanism 13 engages to join the cylindrical operation member 11 so that it is unable to make a relative turning therewith.

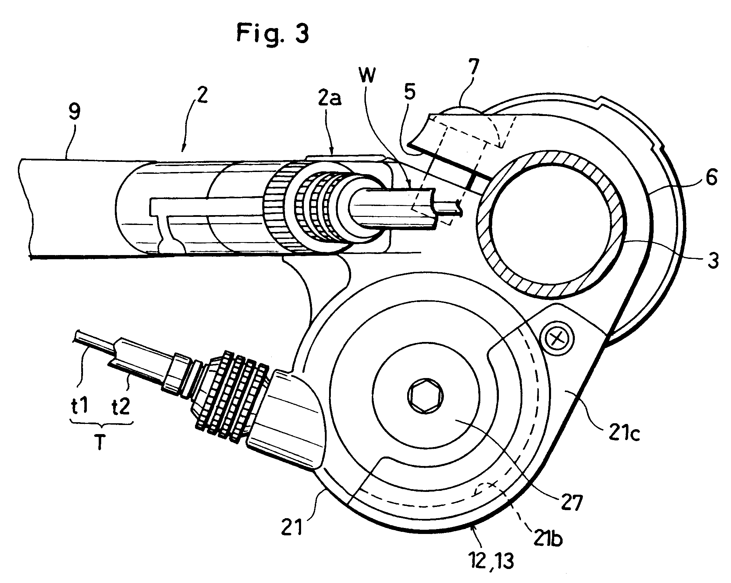

Below the brake bracket 2a, the speed change operation mechanism 12 and the transmission mechanism 13 are housed in a cylindrical housing 21 which is formed integrally with the brake bracket 2a and the mount 6. As shown in Fig. 4 the cylindrical housing 21 has an opening at its transversally outward end portion, and this opening is capped by a lid 21a fastened by a bolt 26. At its transversally inward end portion there is formed a window 21b as shown in Fig 3 through which the speed control cable T is introduced therein. This window 21b is enclosed by a lid 21c.

As shown in Fig. 4 the speed change operation assembly 12 according to this embodiment comprises the cylindrical housing 21 which includes a shaft member 22 supported substantially in parallel to the axis of the handlebar 3, a cable reel 23 rotatably fitted around this shaft member 22 and is connected via the transmission mechanism 13 with the cylindrical operation member 11, and a retainer mechanism 24 for holding this cable reel 23 against the shaft member 22 at its predetermined or optional rotational position.

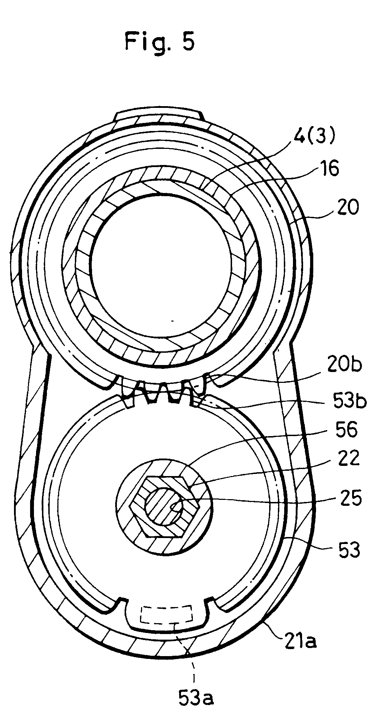

As shown in Figs. 4 and 5 the shaft member 22 is formed in a hexagonal column having a shaft hole 25, and is fixedly bolted against the cylindrical housing 21 by two bolts 26, 27 each axially screwed from an opposing end to prevent relational rotation of the shaft member 22 against the cylindrical housing 21.

Around this shaft member 22 a substantially cylindrical shaft sleeve member 28 is fixedly fitted. The cable reel 23 is rotatably supported inward axially of this shaft sleeve member 28. It should be appreciated to note here that in the following description, an axially outward direction of the shaft member 22 refers to a transversally outward direction of the bicycle.

As shown in Figs. 4, 13, 14 and 15 the cable reel 23 comprises a cylindrical reel member 31 , ratchet roller member 33 and a retainer mechanism housing portion 35: The cylindrical reel member 31 has on its surface a cable winding groove 29 which leads to a nipple holding portion 30. The ratchet roller member 33 is provided outward axially of the reel member 31, and has a plurality of ratchet teeth formed around it. The retainer mechanism housing 35 is formed by enlarging a shaft hole 34 inward axially of the reel member 31.

The reel member 31, or the shaft hole 34 on the ratchet roller member 33 are rotatably fitted around the shaft sleeve member 28, while the retainer mechanism housing 35 encases the retainer mechanism 24 to be detailed later.

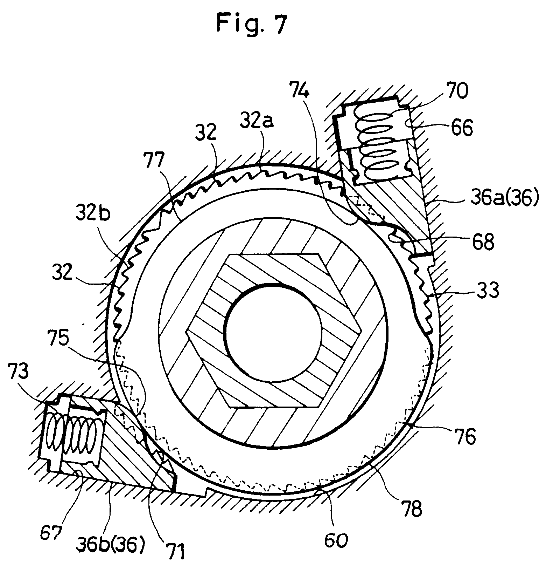

As shown in Fig. 7 the ratchet roller member 33 has a plurality of ratchet teeth 32 on its outer surface in a symmetrical layout to form a pair of ratchet teeth rows 32a, 32b each extending substantially along 180 ° angle. The two ratchet teeth rows 32a, 32b have an opposedly arranged teeth orientation in their teeth 32, which engage with counter members 36 of the transmission mechanism (to be detailed later) to rotate the cable reel 23.

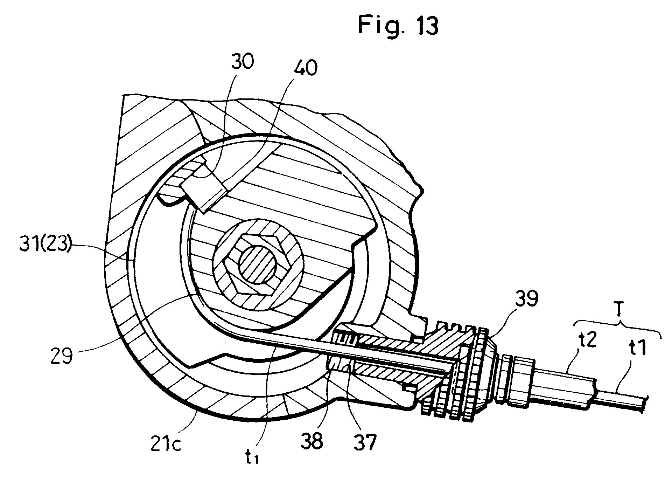

As shown in Fig. 13 a cable hole 37 is formed outward radially of the reel member 31 of the cable reel 23 in the cylindrical housing 21.

This is to introduce the inner cable t1 of the speed control cable T into the cylindrical housing 21 for winding and unwinding operation thereof by the cable reel member 23. The inner cable t1 has a sheathing outer cable t2 fitted with an adjusting screw 39. The cable hole 37 has an internal thread 38. The adjusting screw 39 engages with this thread 38, fastening an end portion of the outer cable t2 to the cylindrical housing 21.

The inner cable t1 extends out of the adjusting screw 39, through the cable hole 37 into the cylindrical housing 21, where it is laid along the cable winding groove 29 of the reel member 31, and then, a nipple 40 fitted at an end thereof is fastened to the nipple holding portion 30, thereby connecting the inner cable t1 with the cable reel member 23.

With the arrangement described hereinabove, referring now to Figs. 13 through 15, when the cable reel member 23 is rotated by the transmission mechanism 13, the inner cable t1 fastened to the reel member 31 is caused to be wound or unwound against the outer cable t2 which is fastened to the cylindrical housing 21. This relative movement between the inner cable t1 and the outer cable t2 causes a derailleur to perform a speed change operation.

In this embodiment a click mechanism 24a is used as the retainer mechanism 24.

As shown in Figs. 4, 16, 17, and 18 this click mechanism 24a includes a click plate 42 having a plurality of engaging recesses 41 at a predetermined radial interval centering around the shaft member 22, a ball holder 44 for operatively retaining steel balls 43, and a pair of disk springs 45 for pressing the ball holder 44 against the click plate 42.

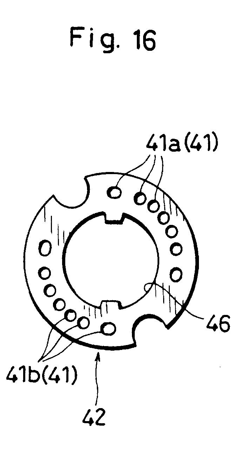

As shown in Fig. 16 the click plate 42 is substantially formed in a donut-shaped disk, whose center hole 46 is fixedly fitted to the cylindrical housing 21 around an internal boss portion 47 which projects outward axially of an internal center portion on the inner side wall of the cylindrical housing 21. On the click plate 42 there is provided a pair of engaging recesses 41a, 41b comprising a plurality of engaging recesses 41 laid in a radially opposing relation to each other.

At an axially outside of the click plate 42, a plurality of steel balls 43 is retained by the ball holder 44 as shown in Fig. 4.

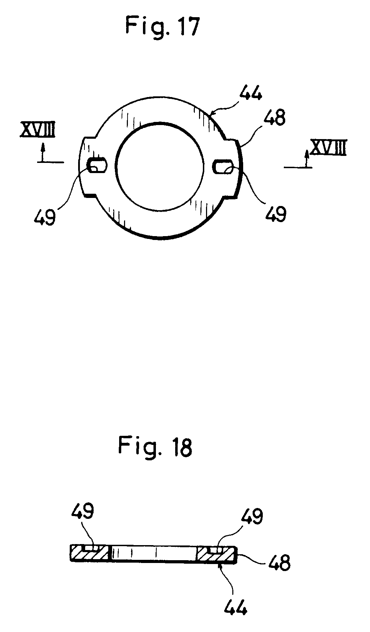

As shown in Figs. 17 and 18 the ball holder 44 is a member formed substantially in a shape of a donut, and is rotatably fitted around the internal boss portion 47 of the cylindrical housing 21, whereas it is fixedly fitted at its projected portion 48 to an inner portion of the retainer mechanism housing 35 of the cable reel member 23.

On this ball holder 44 a pair of ball retaining halls 49 of a predetermined depth is formed at a corresponding radial location to the engaging recesses 41 formed on the click plate 42 facing to each other along a diameter. Each ball retaining hole 49 operatively retains an above-mentioned steel ball 43.

Further, as shown in Fig. 4, outward axially of the ball holder 44 there is provided a pair of disk springs 45 for elastically urging the ball holder 44 against the click plate 42. The disk springs 45 are substantially formed in a shape of donut, whose center hole 50 is rotatably fitted around the internal boss 47.

Axially outward of the disk springs, there is fitted around a press-urging ring 51 for pressing the disk spring 45 thereby elastically urging the ball holder 44 against the click plate 42. This press-urging ring 51 is pressedly held by and between an axially inward end of the shaft member 28 and an axially outward end of the inside boss 47.

In this click mechanism 24a the steel balls 43 are held rotatably with the cable reel member 23, and elastically contacted with the click plate 42 which is fixedly supported against the cylindrical housing 21. Thus, when the cable reel member is rotated, the steel balls 43 engage with the engaging recesses 41 stepwise on the click plate 42, thereby steppedly holding the cable reel member 23 at predetermined rotational positions against the cylindrical housing 21.

With the use of this click mechanism 24a, the inner cable t1 of the speed control cable T can be held at predetermined rotational positions of the cable reel member 23, guaranteeing more assured and positive speed change operation.

Turning now to Fig. 4 again, the transmission mechanism 13 according to this embodiment comprises a drive gear 20 fixedly mounted inward axially of the cylindrical operation member 11, a driven gear 53 rotatably mounted around the shaft member 22 of the cylindrical housing 21 to be driven by the drive gear 20, and a rotational coupling member 54 rotated by this driven gear 53.

As shown in Figs. 4 and 5, the drive gear 20 is rotatably mounted inward axially of the cylindrical operation member 11 around the collar 16, and is rotated with the cylindrical operation member 11 since it is fastened to the cylindrical operation member 11 via a projecting spline 55 extended outward axially of the boss 20a to fit the spline groove 19 formed at an end portion of the cylindrical operation member 11.

The driven gear, as shown in Figs. 4 and 5, has teeth 53b to engage with teeth 20b of the drive gear 20. It is rotatably supported around a collar 56 fitted around the shaft member 22, and is housed inward of the lid member 21a. At a diametrically opposing location of an engagement area of the drive and driven gears 20 and 53 centering around the shaft member 22, there is formed an engaging portion 53a extended inward axially and substantially in parallel to an axis of the shaft member 22 to engage and drive the rotational coupling member 54.

The rotational coupling member 54 according to this embodiment is substantially formed in a cylindrical shape, and is supported rotatably around the shaft member 28. The rotational coupling member 54 includes a shaft hole 58 where it is rotatably supported around the shaft member 28, and to the sides thereof, further includes an outward axial spring housing space 59, and an inward axial roller housing space 60. On a circumferential wall of this spring housing space 59 there is formed an engaging groove 61 to accept the engaging portion 57 of the driven gear.

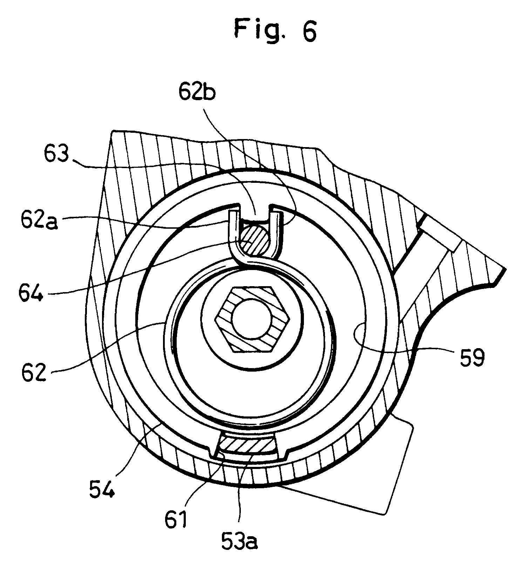

Within the spring housing space 59 there is mounted a coil spring 62. On an inside wall of the spring housing space 59 there is provided a spring stopper 63 as shown in Fig. 6. Upper and lower free end portions 62a, 62b of the coil spring 62 pinch and hook around this spring stopper 63. Also pinched by the upper and lower free end portions 62a, 62b is a spring stopper pin 64 fixed on a surface inside axially of the partition plate 65 which bridges the handlebar 3 and the shaft member 22.

With the above-mentioned arrangement the rotational coupling member 54 is urged toward a neutral rotational position where winding and unwinding of the cable is to commence. Accordingly, the cylindrical operation member 11 which is operatively connected therewith is also urged toward a neutral rotational position where winding and unwinding of the cable is to commence.

According to this arrangement, when the cylindrical operation member 11 is released after it is turned to a cable winding direction (Fig. 2, Arrow X) or a cable unwinding direction (Fig. 2, Arrow Y), it automatically turns back to the neutral position.

Turning to Fig. 4, the roller housing space 60 accomodates a ratchet roller 33 of the cable reel member 23. The transmission mechanism 13 according to this embodiment is configured so that when the cylindrical operation member 11 is turned from the neutral operational position to the cable winding or unwinding direction, the cable reel member 23 would rotate with the cylindrical operation member 11, whereas when the cylindrical operation member 11 turns back to the neutral position, this rotational coupling relation would be disconnected. In this embodiment it is structured as follows:

Turning now to Figs. 7 through 12, the ratchet roller 33 has plural circumferential ratchet teeth 32, which are laid out in a pair of ratchet teeth rows 32a, 32b. On the other hand, the roller housing space 60 has on its internal wall a pair of cylindrical space 66, 67 located with the core shaft between. In one of these space 66 there is slidably mounted an engagement member 36a. This member is urged by a spring 70 toward a circumference of the ratchet roller 33, and has a plurality of engaging teeth 68 for engagement with one ratchet teeth row 32a in a rotational operation of the cylindrical operation member 11 in one direction (Fig. 2, Arrow X.) Likewise, in the other space 67 there is also slidably mounted an engagement member 36b. This member is urged by a spring 73 toward a circumference of the ratchet roller 33, and has a plurality of engaging teeth 71 for engagement with the other ratchet teeth row 32a in a rotational operation of the cylindrical operation member 11 in the other direction (Fig. 2, Arrow Y.) In addition, as clearly shown in Figs. 7 through 9 each engagement member 36a, 36b has a respective bulge 74, 75 on their axial side. These bulges project beyond the respective engaging teeth 68, 71 toward the ratchet roller 33.

Turning now to Fig. 4, at an axially outside location of the ratchet roller 33 there is provided a ratchet control plate 76 formed integrally with the shaft member 28. This ratchet control plate 76, as shown in Fig. 7, includes an engagement member non-pressing portion 77 which is a substantial semicircle radially smaller than the teeth root of the ratchet teeth 32, and an engagement member pressing portion 78 which is a substantial semicircle radially as equal as the teeth top of the ratchet teeth 32.

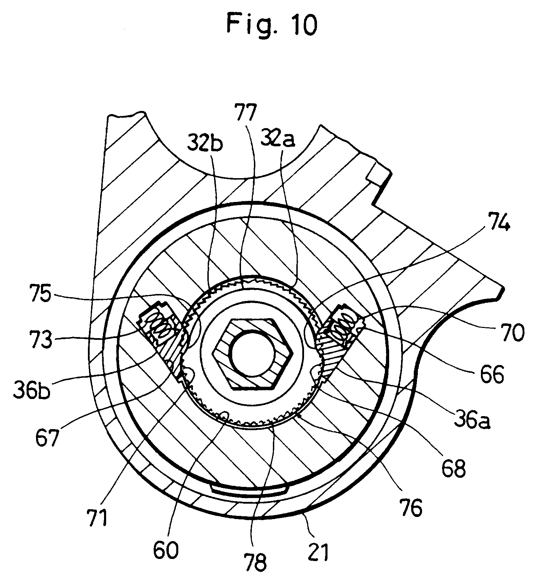

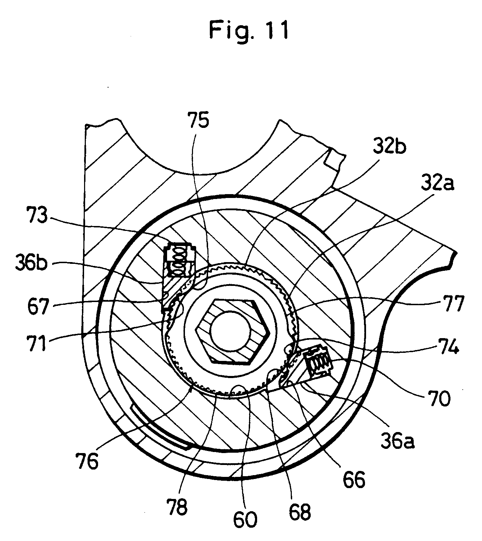

As shown in Fig. 10 the arrangement of the ratchet control plate 76 is such that the bulges 74, 75 on the pair of engagement members 36a, 36b would face the non-pressing portion 77 when the cylindrical operation member 11 is located at the neutral position. From this position, when the cylindrical operation member 11 is turned in the direction of Arrow X in Fig. 2, for example, the result is as shown in Fig. 11: The bulge 74 of the engaging member 36a (the member at the right-hand side in the Fig.) is contacted by the engagement member pressing portion 78 to disengage the engagement member 36a and the ratchet roller 33, whereas the other engagement member 36b (left in the Fig.) is still engaged with the ratchet roller 33. In other words, the rotational coupling made by the engagement member 36b causes the cable reel member 23 to be turned with the cylindrical operation member 11 but in the reverse direction. However, when the cylindrical operation member 11 is turned back to the neutral position, the engagement teeth 71 of the engagement member 36b will just slip along the ratchet teeth 32 of the ratchet roller 33, and will not engage with them, whereas the engagement member 36a (right in the Fig.) is still contacted by the engagement member pressing portion 78 at its bulge portion. As a result the cable reel member 23 will not turn with the cylindrical operation member 11.

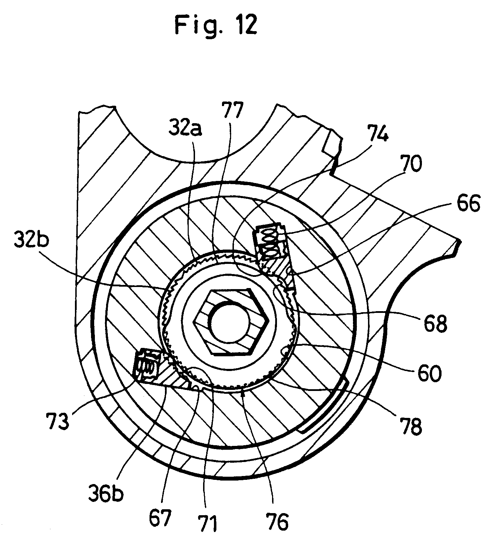

On the other hand, when the cylindrical operation member 11 is turned otherwise (in the direction of Arrow Y in Fig. 2,) the result is as shown in Fig. 12: The engagement established by the engagement member 36a (right) will cause the cable reel member 23 to turn with the cylindrical operation member 11, but when the cylindrical operation member 11 is turned back to the neutral rotational position, the cable reel member 23 will not turn therewith.

In summary, the cable reel member 23 will only rotate with the cylindrical operation member 11 when the cylindrical operation member 11 is turned from the neutral rotational position toward the cable winding direction (Arrow X in Fig. 2) or the cable unwinding direction (Arrow Y in Fig. 2), and will not rotate with the cylindrical operation member 11 when it is turned back to the neutral rotational position by the urge of the spring 62.

With the arrangement described hereinabove when the cylindrical operation member 11 is turned, the cable reel member 23 will rotate to cause the inner cable t1 fastened around the reel 31 to be wound or unwound against the outer cable t2 fastened to the cylindrical housing 21. This relative axial movement between the inner cable t1 and the outer cable t2 can cause a derailleur (not shown) to perform a speed change operation.

In the speed change operation assembly 1 according to this embodiment structured as hereinabove, the cylindrical operational member 11 is urged by the spring 62 so that it would automatically turn back to the neutral rotational position as the commencing point of the cable winding and unwinding. As a result, a rotational operation of the cylindrical operational member 11 can always be started at the same rotational position. In addition, when the cylindrical operation member 11 is turned back to the neutral rotational position, it does not cause the cable reel member 23 to rotate with it, which means that returning movement of the cylindrical operation member 11 will not cause the inner cable t1 of the control cable T to be rewound after release or unwound after winding. In other words a plurality of reciprocal rotational operation of the cylindrical operation member 11 can cause the cable reel member 23 to rotate intermittently by a predetermined amount. Furthermore, a speed change operation may be achieved without unhanding the cylindrical operation member 11 since these rotational operations can always be commenced at the same rotational position. This makes a speed change operation easier and improves greatly the riding safety during a speed change operation.

Further, in the present invention a speed change operation can be performed through a rotational operation of the cylindrical operation member 11 which constitutes the handle grip. This allows a cyclist to deal with situations where urgent braking operation is necessitated. A cyclist can swiftly apply brake even during a speed changing operation, which contributes greatly to an improved safety.

Still further, speed changing operatability has been significantly improved in this embodiment with the inclusion of the built-in click mechanism 24 for holding the cable reel member 23 stepwise.

Also, it is possible to locate the speed changing operation mechanism 12 apart from the cylindrical operation member 11 which is a constituent of the handle grip 10. For example, it may be mounted at a location which would not disturb handle operation such as below the handlebar or handle grip as shown in the embodiment. This contributes to improved operatability and a more compact assembly as well as an improved appearance of a handle grip area.

Moreover, an amount of one reciprocal rotational operation of the cylindrical operation member 11 is so small that the cyclist would not need to change his/her grip position on the cylindrical operation member 11 even when a speed change operation calls for a large amount of cable winding. This remarkably improves speed change operatability, auures readily access to braking operation, resulting in significantly improved riding safety.

In addition, since an amount of one reciprocal rotational operation of the cylindrical operation member 11 is small enough, the cross section of the cylindrical operation member 11 may not be limited to a circle, but a different cross section such as an oval or the provision of a finger resting bulge as shown in Fig. 2 or other shapes which best fit with cyclist's hands and fingers may be selected.

Turning now to Figs. 19 through 21, there is shown a second embodiment of the present invention.

This embodiment makes use of what is known as a power ratchet mechanism 24b in place of the click mechanism 24a to serve as a retainer mechanism 24.

As shown in Figs. 19 and 20 the power ratchet mechanism 24b includes a ratchet roller 79 fitted rotatably around an inside boss 47 of the cylindrical housing 21, and a ratchet pawl 82 mounted in a ratchet pawl housing hole 80 located intermediate inside axially of the retainer mechanism housing space 35 formed inward axially of the cable reel member 23. The ratchet pawl 82 is elastically urged inward radially by a spring 81 and engages with the ratchet roller 79.

The ratchet roller 79 has a uni-directional ratchet teeth row around it, and is pressed by the sides so that it would rotate at a predetermined friction.

This embodiment uses a friction plate 84 fitted outside axially of the ratchet roller 79 around the shaft member 22 and press-fixed between an inward end of the shaft sleeve member 28 and an outward end of the inside boss 47. Also, a substantially disk-shaped serration washer 85 is mounted inward axially as a spring means. This serration washer is pressed outward axially from outside of the cylindrical housing 21, thereby elastically press-hold the ratchet roller 79 at a predetermined friction.

As shown in Figs. 19 and 21 the presser 86 comprises a seat 87 to accomodate a head of a bolt 27 screwed into a center hole of the shaft member 22, and three pressing legs 89 extending axially from a bottom surface of the seat 87 through the cylindrical housing 21 to press the serration washer 85. As each pressing leg 89 presses an inner edge of the serration washer 85, the outer edge of the serration washer 85 elastically contacts against an inside wall of the ratchet roller 79 to cause this ratchet roller 79 to be elastically pressed between the serration washer 85 and the friction plate 84 to generate a predetermined friction. The ratchet roller 79 and the ratchet pawls 82 are arranged to allow the cable reel member 23 to rotate freely in a cable winding direction shown by Arrow P in Fig. 21.

The ratchet roller 79 is elastically pressed by the serration washer 85 and the presser 86 and is given a predetermined frictional resistance against rotation. Therefore, if a pulling force applied to the speed control cable T is disregarded, the cable reel member 23 can rotate virtually without friction toward Arrow P, whereas it is accompanied by the friction when it turns toward Arrow Q.

In other words, the cable reel member 23 can turn freely against the ratchet roller 79 when the cable reel member 23 rotates toward Arrow P, whereas when it rotates toward Arrow Q, the ratchet teeth 83 engage with the ratchet pawl 82 to cause the ratchet roller 79 under friction to rotate therewith.

With the above-mentioned power ratchet mechanism 24b, it is now possible that when the cylindrical operation member 11 is reciprocally rotated to unwind the cable, cable T will be under friction and not be overly unwound by the pulling tension from a derailleur, allowing the cable reel member 23 to turn according to the rotation of the cylindrical operation member 11 and to stay at an optional rotational position. On the other hand when the control cable T is wound, the ratchet roller 79 is free from the friction and therefore, the control cable T can be wound smoothly with a minimum force.

The scope of the present invention is not limited or confined to the embodiments so far described.

For example, instead of a click mechanism 24a or a power ratchet mechanism 24b employed in the embodiment speed change operation assemblies, a retainer mechanism as used in an ordinary speed change operation assembly where the control cable is retained by friction may be used as well.

Further, the present invention is applicable to bicycles not only with a flat handlebar as exemplified in the embodiments but with a drop type and other types of handlebars as well.

Another variation may be that instead of forming a speed change operation assembly integrally with a brake lever assembly, it may be formed separately from a brake lever assembly.

Another variation includes that instead of the cylindrical operation member 11 constituting a part of the handle grip 10, the cylindrical operation member 11 may constitute an entire handle grip.

Still Further, instead of the embodiment speed change operation mechanism 12 structured by rotatably supporting the cable reel member 23 around the shaft member 22 spaced in parallel to an axis of the handlebar 2, an axially structured speed change operation mechanism where the cable reel member 23 is rotatably supported around an axis of the handlebar 2 may be used.

## Claims

1. A bicycle speed change operation assembly (1) comprising:
a cylindrical operation member (11) rotatably supported around a grip end portion (4) of a handlebar (3),
a speed change operation mechanism (12) provided in proximity of said grip end portion (4) of said handlebar (3) and capable of winding and unwinding a speed control cable (T), and
a transmission mechanism (13) provided between said cylindrical operation member (11) and said speed change operation mechanism (12) for driving said speed change operation mechanism (12) in response to the rotation of said cylindrical operation member (11); wherein
said speed change operation mechanism (12) functions to progressively wind or unwind said control cable (T) each in response to repeated rotational reciprocation of said cylindrical operation member (11) in only one direction from a neutral rotational position.

2. The bicycle speed change operation assembly according to Claim 1, wherein said speed change operation mechanism (12) comprises:
a shaft member (22) provided in proximity of said grip end portion (4); and a cable reel (23) rotatably mounted around said shaft member (22) and linked via said transmission mechanism (13) with said cylindrical operation member (11);
said cylindrical operation member (11) being spring-urged toward said neutral rotational position which provides a commencing point at the time of rotation in cable winding and unwinding directions;
said transmission mechanism (13) functioning to rotate said cable reel (23) with said cylindrical operation member (11) at the time of rotating said cylindrical operation member (11) in said cable winding or unwinding direction from said neutral position but to disconnect rotational coupling relation between said cylindrical operation member (11) and said cable reel (23) when said cylindrical operation member (11) is rotated back to said neutral position.

3. The bicycle speed change operation assembly according to Claim 1, wherein said cylindrical operation member (11) has a finger engaging bulge (18) projecting g radially outward for engagement with a cyclist's finger.

4. The bicycle speed change operation assembly according to Claim 1, further comprising an integral brake lever assembly (2).

5. The bicycle speed change operation assembly according to Claim 1, wherein said cylindrical operation member (11) constitutes a handle grip.

6. The bicycle speed change operation assembly according to Claim 1, wherein said cylindrical operation member (11) constitutes a handle grip (10) together with a cylindrical grip member (14) fitted around at an outermost portion of said handlebar (3).

7. The bicycle speed change operation assembly according to Claim 1, wherein said cable reel (23) is rotatably supported around an axis of said handlebar (3), whereby said speed change operation mechanism (12) is coaxial with said handlebar (3).

8. The bicycle speed change operation assembly according to Claim 2, wherein said shaft member (22) is is spaced from but held in parallel to an axis of said handlebar (3).

9. The bicycle speed change operation assembly according to Claim 2, wherein said speed change operation mechanism (12) includes a retainer mechanism (24) for holding said cable reel (23) at a predetermined or optional rotational position.

10. The bicycle speed change operation assembly according to Claim 9, wherein said retainer mechanism (24) includes a click mechanism (24a) capable of holding said cable reel (23) at a selected one of stepwise rotational positions.

11. The bicycle speed change operation assembly according to Claim 9, wherein said retainer mechanism (24) includes a power ratchet mechanism (24b) capable of holding said cable reel (23) at a selected one of stepwise rotational positions.

12. The bicycle speed change operation assembly according to Claim 9, wherein said retainer mechanism (24) is capable of holding said cable reel (23) steplessly at an optional rotational position by friction.

## Patentansprüche

1. Einrichtung (1) für die Gangschaltung eines Fahrrades mit: einem zylindrischen Bedienteil (11), welches drehbar um einen Griffendabschnitt (4) einer Lenkstange (3) gelagert ist,
einem Gangschaltmechanismus (12), welcher in der Nähe des Griffendabschnittes (4) der Lenkstange (3) vorgesehen ist und durch den ein Gangsteuerkabel (T) aufwickel- und abwickelbar ist, und mit
einem Kraftübertragungsmechanismus (13), welcher zwischen dem zylindrischen Bedienteil (11) und dem Gangschaltungsmechanismus (12) für das Antreiben des Gangschaltungsmechanismus (12) in Abhängigkeit der Drehung des zylindrischen Bedienteiles (11) vorgesehen ist; wobei
durch den Gangschaltmechanismus (12) das Steuerkabel (T) jeweils in Abhängigkeit von einer wiederholten Hin- und Herdrehbewegung des zylindrischen Bedienteiles (11), progressiv nur in eine Richtung aus einer neutralen Drehstellung auf- oder abwickelbar ist.

2. Einrichtung nach Anspruch 1, bei der der Gangschaltmechanismus (12) aufweist:
ein Achsenteil (22), welches in der Nähe des Griffendabschnittes (4) vorgesehen ist; und
ein Kabelspulrad (23), welches um das Achsenteil (22) drehbar montiert und über den Kraftübertragungsmechanismus (13) mit dem zylindrischen Bedienteil (11) verbunden ist; wobei das zylindrische Bedienteil (11) federnd zu der neutralen Drehstellung vorgespannt ist, die eine Ausgangsstelle bei der Drehung in die Kabelaufwickel- und Abwickelrichtung vorsieht; wobei durch den Kraftübertragungsmechanismus (13) beim Drehen des zylindrischen Bedienteiles (11) der neutralen Stellung in Kabelaufwickel- oder Abwickelrichtung das Kabelspulrad (23) mit dem zylindrischen Bedienteil (11) drehbar ist, jedoch die Drehkoppelbeziehung zwischen dem zylindrischen Bedienteil (11) und dem Kabelspulrad (23) beim Drehen des zylindrischen Bedienteils (11) zurück zu der neutralen Stellung lösbar ist.

3. Einrichtung nach Anspruch 1, bei der das zylindrische Bedienteil (11) eine Fingerangreifausformung (18) besitzt, welche radial nach außen für das Eingreifen mit dem Finger eines Radfahrers hervorragt.

4. Einrichtung nach Anspruch 1, welche ferner eine integrierte Bremshebelanordnung (2) enthält.

5. Einrichtung nach Anspruch 1, bei der das zylindrische Bedienteil (11) durch einen Lenkstangengriff gebildet ist.

6. Einrichtung nach Anspruch 1, bei der das zylindrische Bedienteil (11) durch einen Lenkstangengriff (10) zusammen mit einem zylindrischen Griffteil (14) gebildet ist, welches am äußersten Abschnitt der Lenkstange (3) herum angebracht ist.

7. Einrichtung nach Anspruch 1, bei der das Kabelspulrad (23) um eine Achse der Lenkstange (3) drehbar gelagert ist, wobei der Gangschaltmechanismus (12) koaxial zu der Lenkstange (3) angeordnet ist.

8. Einrichtung nach Anspruch 2, bei der das Achsenteil (22) von einer Achse der Lenkstange (3) beabstandet ist, jedoch parallel gehalten ist.

9. Einrichtung nach Anspruch 2, bei der der Gangschaltmechanismus (12) einen Zurückhaltemechanismus (24) zum Halten des Kabelspulrades (23) bei einer vorbestimmten oder gewünschten Drehposition enthält.

10. Einrichtung nach Anspruch 9, bei der der Zurückhaltemechanismus (24) einen Klinkenmechanismus (24a) enthält, durch den das Kabelspulrad (23) an einer aus abgestuften Drehstellungen ausgewählten Stellung haltbar ist.

11. Einrichtung nach Anpruch 9, bei der der Zurückhaltemechanismus (24) einen Kraftsperrklinkenmechanismus (24b) enthält, durch den das Kabelspulrad (23) an einer aus abgestuften Drehstellungen ausgewählten Stellung haltbar ist.

12. Einrichtung nach Anspruch 9, bei der durch den Zurückhaltemechanismus (24) das Kabelspulrad (23) stufenlos an einer gewünschten Drehposition durch Reibung haltbar ist.

## Revendications

1. Dispositif de changement de vitesses pour bicyclettes (1) comportant :
un élément d'actionnement cylindrique (11) supporté de façon rotative autour d'une partie d'extrémité de poignée (4) d'un guidon (3),
un mécanisme de changement de vitesses (12) prévu à proximité de ladite partie d'extrémité de poignée (4) dudit guidon (3) et capable d'enrouler et de dérouler un câble de commande de vitesses (T), et
un mécanisme de transmission (13) prévu entre ledit élément d'actionnement cylindrique (11) et ledit mécanisme de changement de vitesses (12) afin d'entraîner ledit mécanisme de changement de vitesses (12) en réponse à la rotation dudit élément d'actionnement cylindrique (11) ; dans lequel
ledit mécanisme de changement de vitesses (12) fonctionne de façon à enrouler ou dérouler progressivement ledit câble de commande (T) en réponse à des actionnements en rotation répétés dudit élément d'actionnement cylindrique (11) dans une seule direction depuis une position de rotation de point mort.

2. Dispositif de changement de vitesses pour bicyclettes selon la revendication 1, dans lequel ledit mécanisme de changement de vitesses (12) comporte :
un élément d'axe (22) prévu à proximité de ladite partie d'extrémité de poignée (4) ; et une bobine de câble (23) montée de façon rotative autour dudit élément d'axe (22) et reliée par l'intermédiaire dudit mécanisme de transmission (13) audit élément d'actionnement cylindrique (11) ;
ledit élément d'actionnement cylindrique (11) étant poussé par ressort vers ladite position de point mort de rotation qui procure un point de départ au moment de la rotation dans les directions d'enroulement et de déroulement de câble ;
ledit mécanisme de transmission (13) fonctionnant de façon à faire tourner ladite bobine de câble (23) avec ledit élément d'actionnement cylindrique (11) au moment de la rotation dudit élément d'actionnement cylindrique (11) dans ladite direction d'enroulement ou de déroulement de câble depuis ladite position de point mort, mais de façon à déconnecter la relation d'accouplement en rotation entre ledit élément d'actionnement cylindrique (11) et ladite bobine de câble (23) lorsque ledit élément d'actionnement cylindrique (11) est entraîné en rotation en retour vers ladite position de point mort.

3. Dispositif de changement de vitesses pour bicyclettes selon la revendication 1, dans lequel ledit élément d'actionnement cylindrique (11) possède un renflement d'engagement de doigt (18) qui dépasse radialement vers l'extérieur pour engagement avec un doigt de cycliste.

4. Dispositif de changement de vitesses pour bicyclettes selon la revendication 1, comportant en outre un ensemble de levier de frein intégral (2).

5. Dispositif de changement de vitesses pour bicyclettes selon la revendication 1, dans lequel ledit élément d'actionnement cylindrique (11) constitue une poignée.

6. Dispositif de changement de vitesses pour bicyclettes selon la revendication 1, dans lequel ledit élément d'actionnement cylindrique (11) constitue une poignée (10) avec un élément de poignée cylindrique (14) monté autour d'une partie la plus à l'extérieur dudit guidon (3).

7. Dispositif de changement de vitesses pour bicyclettes selon la revendication 1, dans lequel ladite bobine de câble (23) est supportée de façon rotative autour d'un axe dudit guidon (3), de sorte que ledit mécanisme de changement de vitesses (12) est coaxial audit guidon (3).

8. Dispositif de changement de vitesses pour bicyclettes selon la revendication 2, dans lequel ledit élément d'axe (22) est espacé d'un axe dudit guidon (3) mais maintenu parallèle à celui-ci.

9. Dispositif de changement de vitesses pour bicyclettes selon la revendication 2, dans lequel ledit mécanisme de changement de vitesses (12) comprend un mécanisme de retenue (24) pour retenir ladite bobine de câble (23) à une position de rotation optionnelle ou prédéterminée.

10. Dispositif de changement de vitesses pour bicyclettes selon la revendication 9, dans lequel ledit mécanisme de retenue (24) comprend un mécanisme à cliquet (24a) capable de maintenir ladite bobine de câble (23) à une position choisie parmi des positions de rotation dans le sens du pédalage.

11. Dispositif de changement de vitesses pour bicyclettes selon la revendication 9, dans lequel ledit mécanisme de retenue (24) comprend un mécanisme à rochet (24b) capable de maintenir ladite bobine de câble (23) à une position choisie parmi des positions de rotation dans le sens du pédalage.

12. Dispositif de changement de vitesses pour bicyclettes selon la revendication 9, dans lequel ledit mécanisme de retenue (24) est capable de maintenir par frottement ladite bobine de câble (23) sans mouvement de pédalage dans une position de rotation optionnelle.
